# EUROPEAN PATENT APPLICATION

(11) **EP 1 972 512 A2**
(43) Date of publication of application: **24.09.2008**
(21) Application number: 07106955.3
(22) Date of filing: 25.04.2007
(51) Int. Cl.: B60S 1/38

(54) **Vehicle windshield wiper for rain and snow dual purpose**

(30) Priority: 22.03.2007 CN 200710087154
(71) Applicant: Huang, Shih-Hsien, Zuoying District, Kaohsiung City 813 (TW)
(72) Inventor: Huang, Shih-Hsien, Zuoying District, Kaohsiung City 813 (TW)
(74) Representative: Viering, Jentschura & Partner

(57) **Abstract**

The present invention is to provide a "vehicle windshield wiper for rain and snow dual purpose", which comprises a bow elastic strip (100), some clamping devices (200), a strip scraper receptacle (300), a sheath cover (400), a strip scraper (500), two end ferrule caps (600) and a truss saddle (700). Wherein, the sheath cover (400) and two end ferrule caps (600) totally envelope the bow elastic strip (100), clamping devices (200) and strip scraper receptacle (300) so that the snow and icy particles are blocked and separated out unable to intrude or gather in any space thereof. Thereby, the dual function of rain wiper and snow wiper of present invention eliminates the boring action in swapping between rain wiper and snow wiper during interim of snow and non-snow seasons so that it not only saves the extra expense in buying snow wiper for the consuming vehicle drivers but also totally obsoletes the conventional arm-supported snow wiper so as to eliminate the pollution burden incurred by the mass waste conventional snow wipers. Thus, it really possesses double effect in economic benefit and environmental protection.

## Description

### Field of the Present Invention

The present invention relates to a "vehicle windshield wiper for rain and snow dual purpose", which can be universally used under any weather so that not only the swap between rain wiper and snow wiper is avoided but also the bearing area against wind flow is tremendously reduced and results in less fuel consumption due to decrease in output power of the wiper-driving motor so as to achieve double effect in economic benefit and environmental production.

### Background of the Invention

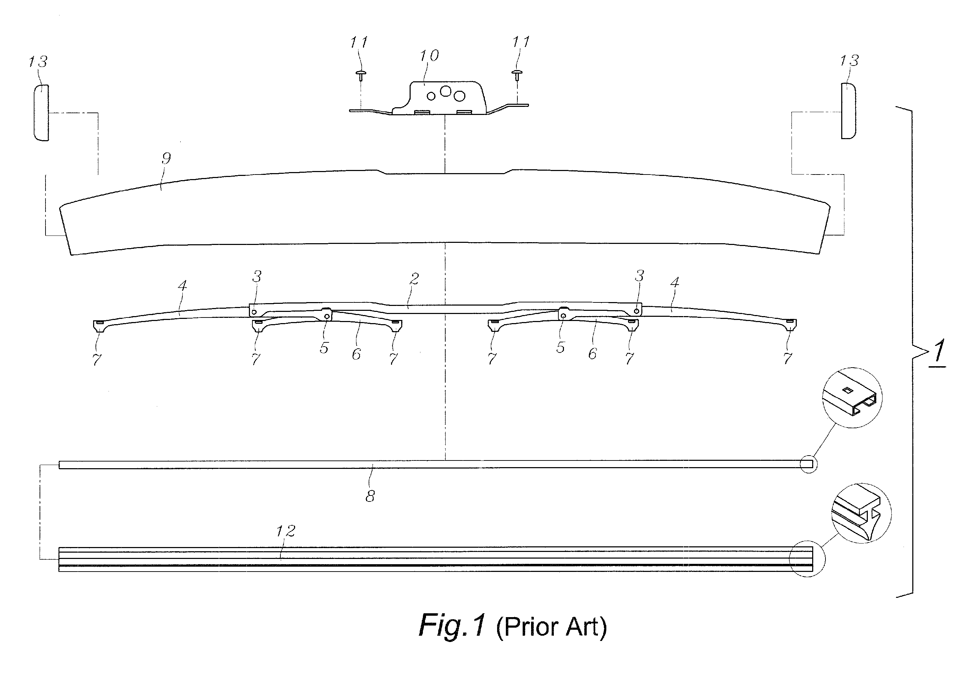

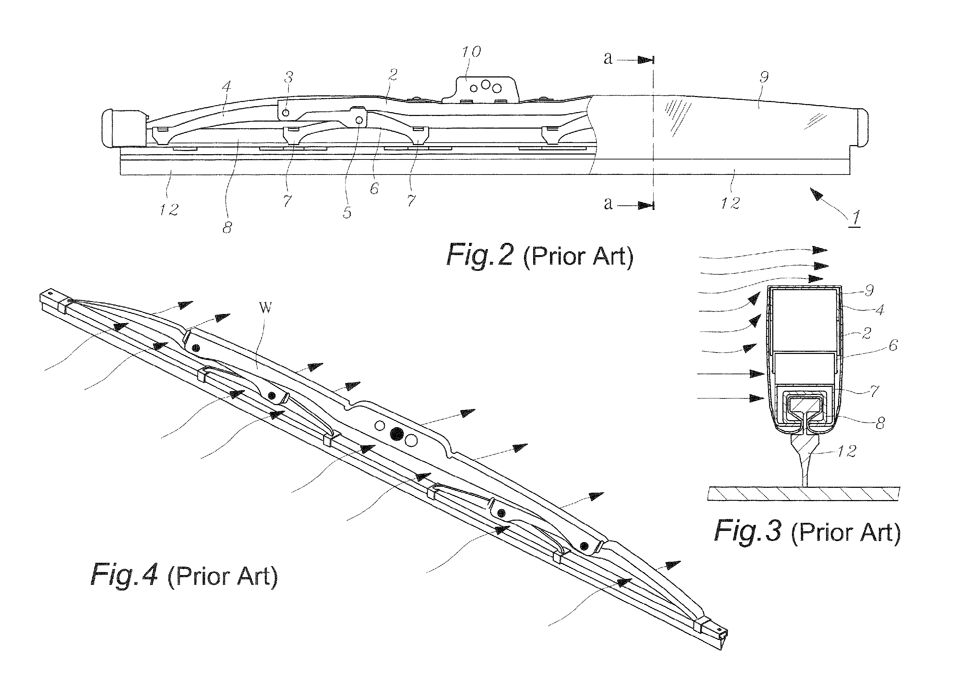

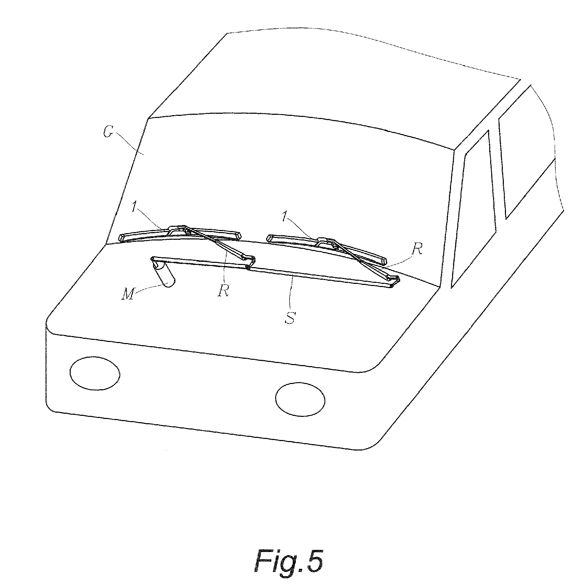

Currently, most of the structure in the windshield snow wiper for the vehicle is adapted from the conventional arm-supported wiper by wrapping a layer of external cover and inserting a strip scraper at the bottom side thereof. As shown in the Fig. **1** to Fig. **5****,** the conventional arm-supported snow wiper **1** comprises a master wiper support **2,** a first holding support **4,** a second holding support **6,** an elastic strip scraper receptacle 8, a hollow tubular external cover **9,** a truss saddle **10,** a strip scraper **12** and two end ferrule caps **13,** wherein: Both ends of said master wiper support **2** are jointed with the first holding support **4** respectively by means of the articulation **3;** The second holding support **6** is jointed with each end of both first holding support **4** respectively by means of the articulation **5;** And, each other end of both first holding support **4** and the both ends of each second holding support **6** is configured a clamping device **7,** where the elastic strip scraper receptacle 8 is securely clamped; The hollow tubular external cover **9** first sleeves either one of both first holding support 4 up to other first holding support **4** for wrapping all holding arms therein; The truss saddle **10** is fixed on said master wiper support **2** via top center of said external cover **9** by two rivets **11**; The strip scraper **12** is gripped by said strip scraper receptacle 8 after inserting therein; Two end ferrule caps 13 are used to cap on both ends of said external cover 9 respectively for retaining integral parts firmly as shown in Fig. 2 and Fig. 3; The conventional arm-supported snow wiper 1 is jointed with the wiper arm R by means of the wiper jointer 70, whereby being linked to the motor M via wiper arm linking bar S, for being used on the windshield of the vehicle as shown in Fig. 5. When the winter comes, the driver must replace the existing conventional arm-supported wiper W by the conventional arm-supported snow wiper 1 so that the snow and icy particles can not attach and gather in the space of the master wiper support 2, first holding support 4, or second holding support 6 by means of the separation and block of the external cover 9 during vehicle movement as shown in Fig. 3 so as to avoid the integral snow wiper from stiffness, which will result in losing function of scraping snow owing to the wiper scraper blade being unable to closely press against the windshield evenly. If the replacement of the wiper does not take action in time, the conventional arm-supported wiper W will become stiff and losing elasticity due to the attachment and gathering of the snow and icy particles in the master wiper support and the other holding supports and result in seriously affecting the driving safety in consequence of losing function of scraping snow on the windshield. That is the reason all the vehicle drivers in the snow area have to spend extra money to buy snow wiper for replacing the traditional rain wiper during snow season under safety consideration; contrarily, the vendors and manufacturers of the windshield wiper are happy to have increase sale volume and revenue. This unfair marketing status, the consumers are the losers and the vendors and manufacturers are the winners, always exists in the snow area so far.

As to some snow wipers in prior art such as US patent numbers of 6108857 and 6598258 and the others, they all falls in the category of foregoing conventional arm-supported snow wiper with adoption of external cover for wrapping the wiper to block the snow and icy particles. For some other snow wipers in prior art such as US patent numbers of 5412177, 5603856, 6049939, 5784751 and the like are different from the foregoing snow wiper of external cover, they all have additional thermal apparatus contrivance to melt the snow on the wiper by heating energy; Therefore, all such kind of snow wipers will increase the fuel expense due to extra gas consumption by the additional thermal apparatus. Moreover, in order to have such additional thermal apparatus installed in the engine compartment of limited space, not only the initial adaptation cost is considerable but also the routine maintenance fee is much; Hence, it does not appeal the consumers due to high total cost thereof and result in failing in the mainstream market without promotional effect.

These foregoing conventional arm-supported snow wiper not only have their own different weaknesses, but also have more common drawbacks as below:
(1). as shown in the Figs **3** and **5****,** although the external cover **9** wrapping on the conventional arm-supported snow wiper **1** can separate and block the intrusion of the snow and icy particles, but the long side of which will become a wind flow barrier during vehicle moving against the wind current so that the motor M, which transmits driving power to the wiper via wiper arm R and wiper arm linking bar S, will suffer a counter reaction from said external cover **9**, which will lead to the increase of power output from motor M and indirectly cause the increase automobile fuel and oil costs; Contrarily, as shown in the Figs **4** and **5****,** during not winter snow season, using the conventional arm-supported wiper W, the wind flow can pass through the gaps among all arms, which means it bears less counter reaction relatively and the motor M outputs less power relatively as well as vehicle fuel will be more economical; In other words, the conventional arm-supported snow wiper 1 does more than conventional arm-supported wiper W fuel consumption; In particular, the accumulation throughout the winter snow season will be more obvious, whereas, the vehicle consuming drivers are still forced to accept it.
(2). Based on traffic safety principles, all the vehicle drivers in the snow region must spend the additional cost to buy conventional arm-supported snow wiper every year, which becomes an inevitable outcome under circumstance of no better alternative products; It is the only way to silently accept various annoyance and inconvenience coming from the replacement between the rain wiper and snow wiper.

### Summary of the Invention

The primary object of the present invention is to provide a "vehicle windshield wiper for rain and snow dual purpose", which comprises a bow elastic strip, some clamping devices, a strip scraper receptacle, a sheath cover, a strip scraper, two end ferrule caps and a truss saddle; By means of the bow elastic strip for replacing the holding supports in the conventional arm-supported snow wiper, then use the sheath cover and two end ferrule caps to totally envelope the bow elastic strip, clamping devices and strip scraper receptacle so that the snow and icy particles are blocked and separated out unable to intrude or gather in any space thereof; Thereby, the dual function of rain wiper and snow wiper of present invention eliminates the boring action in swapping between rain wiper and snow wiper during interim of snow and non-snow seasons so that it not only saves the extra expense in buying snow wiper for the consuming vehicle drivers but also totally obsoletes the conventional ann-supported snow wiper so as to eliminate the pollution burden incurred by the mass waste conventional snow wipers; Thus, it really possesses double effect in economic benefit and environmental protection.

Another object of the present invention is to provide a "vehicle windshield wiper for rain and snow dual purpose" without holding support so that its total size and weight is smaller and lighter than those of the conventional arm-supported snow wiper; Moreover, its bearing area against the air flow is smaller than that of the conventional arm-supported snow wiper so that the output power of the wiper-driving motor is decreased relatively and results in less gas consumption and fuel expense for the vehicles; Thus, it not only prolong the service life span of the wiper-driving motor but also tremendously reduce the vehicle-driving expense for the vehicle drivers in the snow region.

The other object of the present invention is to provide a "vehicle windshield wiper for rain and snow dual purpose" with feature of simple structure and easy production. As vehicle windshield snow wiper belongs to industrial consumable article of mass production for supplying to the demand of billions vehicle in the world, adopting and rearranging the existing equipments and facilities, which used to manufacture conventional wipers, to fabricate the wipers of the present invention saves not only the current assets but also the fixed assets in the production cost, which can be reflected in the product price for benefiting consumers to create the two-win result between the consumers and the manufacturers.

### Brief Description of the Drawings

Fig. **1** is the exploded schematic view of the conventional arm-supported snow wiper.
Fig. **2** is the assembled schematic view of the conventional arm-supported snow wiper.
Fig. **3** shows a sectional view taken along the direction indicated by line **a-a** as shown in Fig. **2**.
Fig. **4** is the perspective schematic view of the conventional arm-supported wiper.
Fig. **5** is the schematic view of the conventional arm-supported snow wiper used on the windshield of the vehicle.
Fig. **6** is the exploded perspective schematic view of the no-holding-support snow wiper.
Fig. **7** is the assembled perspective schematic view of the no-holding-support snow wiper.
Fig. **8** shows a sectional view taken along the direction indicated by line c-c as shown in Fig. **7**.
Fig. **9** is the exploded perspective schematic view of the present invention.
Fig. **10** is the assembled perspective schematic view of the present invention.
Fig. **11** is the perspective schematic view showing the combination of the present invention with the wiper arm.
Fig. **12** is the flow chart showing the assembly steps according to the present invention.
Fig. **13** is the section view showing the wiper presses against the windshield according to the present invention.
Fig. **13A** is the section view showing the wiper brush against the windshield according to the present invention.
Fig. **14** is the schematic view showing the wiper presses against the windshield according to the present invention.
Fig. **14A** is the schematic view showing the conventional arm-supported snow wiper presses against the windshield.
Fig. **15** is the perspective schematic view showing the second exemplary embodiment with the clad cover according to the present invention.
Fig. **16** is the perspective schematic view showing the second preferred exemplary embodiment according to the present invention.
Fig. **17** is the perspective schematic view showing the third exemplary embodiment with the clad cover according to the present invention.
Fig. **18** is the perspective schematic view showing the third preferred exemplary embodiment according to the present invention.

### Detailed Description of the Preferred Embodiments

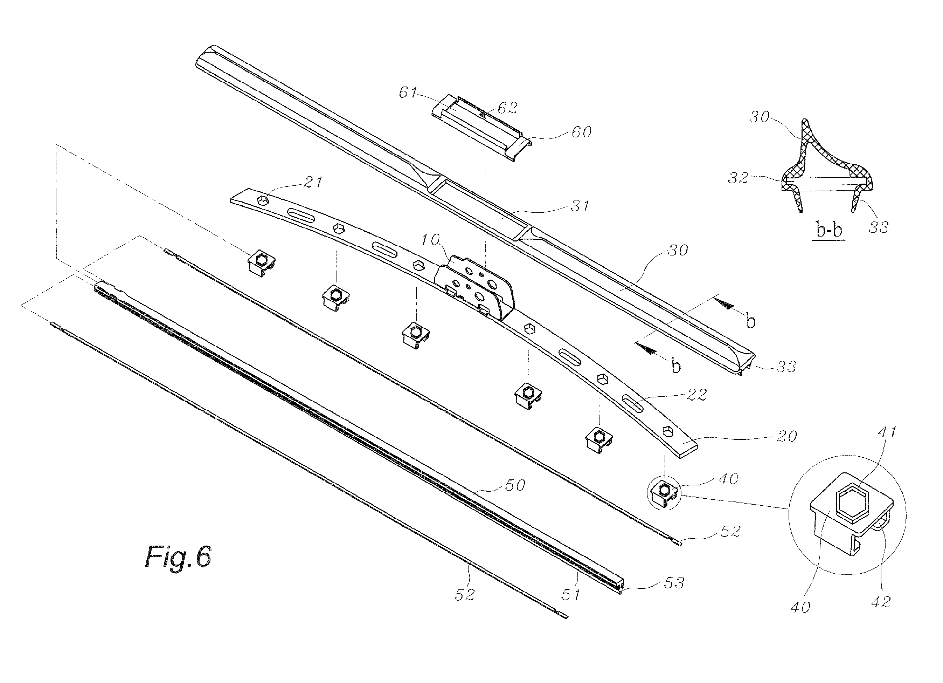

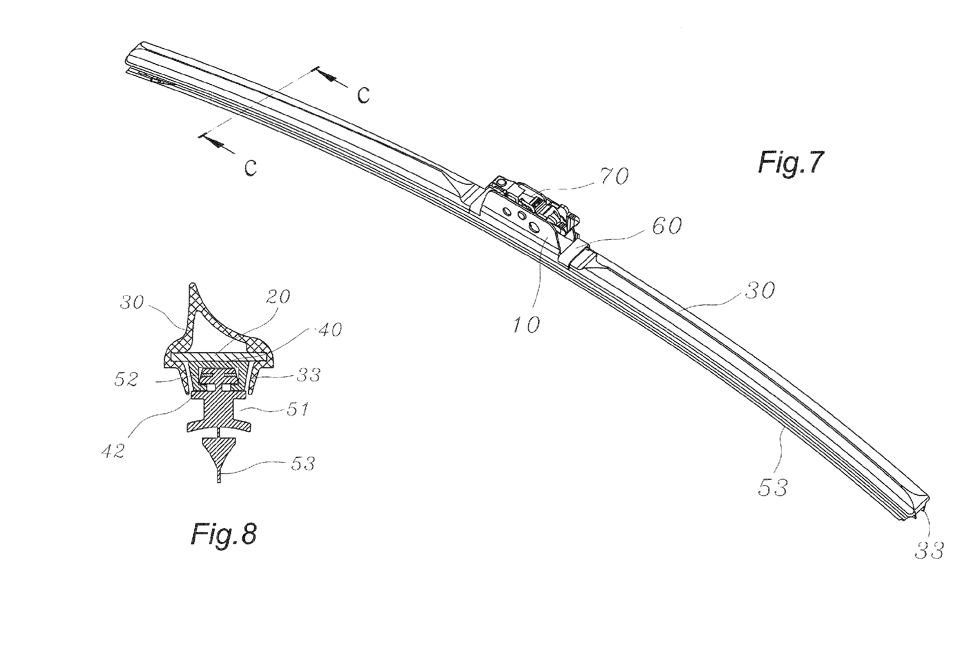

Prior to the description of the concrete embodiment for the present invention, it is declared that the present invention is developed from refining the drawbacks of the conventional arm-supported snow wiper together with the previous product of no-holding-support windshield wiper, which is invented by the same inventor and has being granted the US patent No. 7150066, Japanese patent No. 3115053 and Taiwan patent No. M27955 respectively. The structure of such wiper is shown as in Fig. **6** to Fig. **8****,** which comprises:
a truss saddle **10** is to be fixed at the end of the wiper arm R by means of the wiper jointer **70;**
a bow elastic stripe **20,** which being made by metal stripe bow downwards, is securely jointed with the base side of said truss saddle **10** central upper side thereat; Some polygon holes **21** are evenly punched on the surface; Some oblong hollow pressure adjusting vents **22** are perforated between said adjacent polygon holes **21** with adequate aperture size for even stress distribution;
a stripe cover body **30,** which being made of flexible elastic material by unitary-molding into integral body with a central rectangular hole 31 for accommodating the truss saddle **10** run through, has an elongated ridge on upper portion and a hollow middle portion with a pair of symmetrical elongated flutes **32** juxtaposed inwards at insides along both longitudinal sides as well as a pair of parallel symmetrical baffles 33 configured downwards at the bottom side of the bottom portion with upper connection with said pair of elongated flutes **32** as shown in view b-b of the Fig. **6****;**
some detachable clamping devices **40** has a pair of parallel symmetrical bent inwards clamping angles **42** juxtaposed downwards at the bottom portion and a polygon jut **41,** whose shape is similar to that of the polygon hole **21** on the bow elastic strip **20** but with slightly smaller in the aperture, configured on the upper portion;
a strip scraper **50,** which being made of flexible elastic material by unitary-molding into integral body; has a pair of parallel symmetrical elongated flutes **51** juxtaposed on the upper portion for being securely inserted by said clamping angles **42** of the clamping devices **40** with a pair of parallel symmetrical metal elastic strips **52** splinted along both upper lateral sides thereof and an elongated scraper edge **53** disposed at the bottom portion; And
a rectangular frame cover **60,** which capping at the bottom rim of the truss saddle **10;** has a rectangular hole **61** in the center and two symmetrical snap-on noses **62** juxtaposed at the bottom center along both longitudinal lateral sides.

The structure of the no-holding-support windshield wiper is contrived to employ a bow elastic stripe instead of all the holding arms used in the conventional arm-supported wiper so that whose total size is smaller and whose total weight is lighter than that of the conventional arm-supported wiper relatively; Since being introduced into the market, the no holding arm windshield wiper has being recognized and purchased by many vehicle manufacturers and a lot of consuming vehicle drivers. As to some other advantages those already described in the specifications thereof will not repeat here in redundancy.

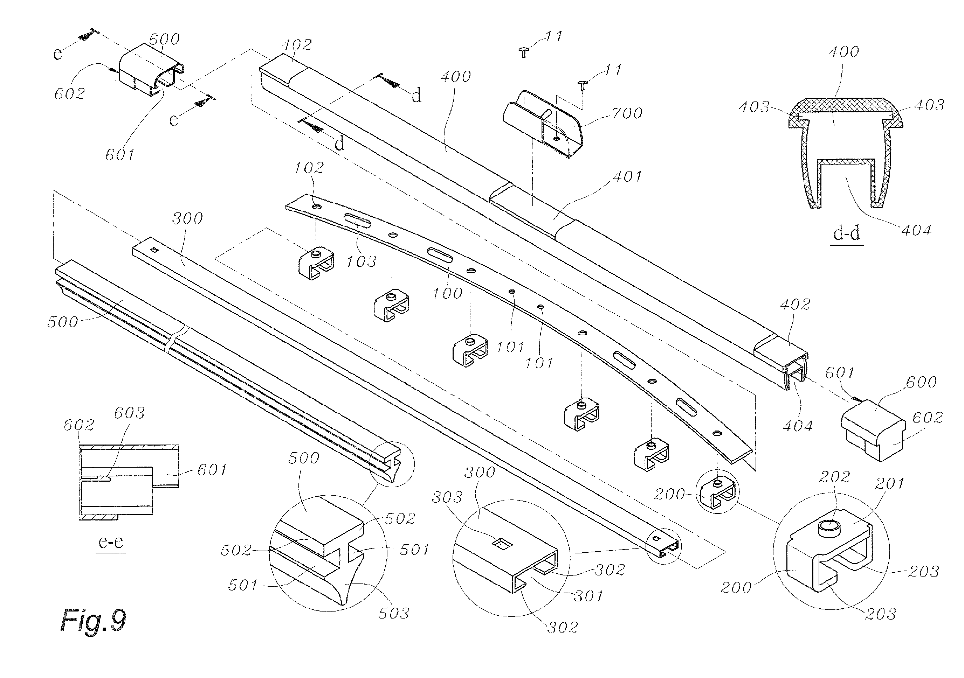

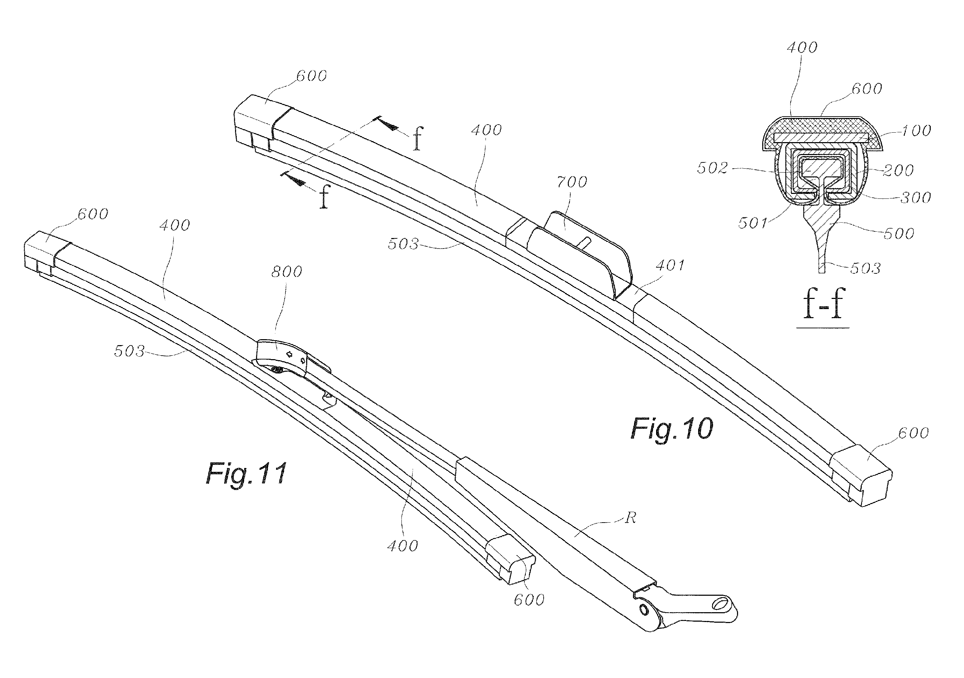

Following is the preferred exemplary concrete embodiment in coordination with the accompanying drawings to describe the present invention; please referring to Fig. 9 to Fig. **11****,** the present invention of "vehicle windshield wiper for dual rain and snow purpose" comprises:
a bow elastic strip **100,** which being made of elastic metal strip in shape of bow downwards, has a pair of lengthwise symmetrical rivet bores **101** punched in the center thereof and a plurality of round holes **102** punched and distributed in even space manner endwise as well as some oblong hollow pressure adjusting vents **103** perforated thereon;
some detachable clamping devices **200,** which corresponding to said round holes **102** on the bow elastic strip **100,** has a hollow round jut **202** with aperture being slightly smaller than that of the round hole **102** configured in the center of the top side **201** and a pair of parallel symmetrical bent inwards clamping angles **203** juxtaposed downwards at the bottom portion;
a strip scraper receptacle **300,** which being made of flexible plastics by unitary-molding into integral body with shape of flat hollow bar, has a central parallel elongated gap **301** run through both ends thoroughly and a pair of parallel symmetrical bent inwards hooked jut strips **302** juxtaposed along both longitudinal lateral sides of the elongated gap **301** as well as a snap-on hole **303** is respectively punched at each end thereof;
a sheath cover **400,** which being made of flexible elastic material by unitary-molding into integral body with shape of tubular hollow bar, has a flat surface formed on the upper portion with a long central attachment **401** plus two short end attachments **402** and a pair of parallel symmetrical elongated flutes **403** juxtaposed insides of both internal longitudinal lateral sides for being inserted by the bow elastic strip 100 as well as an elongated groove **404** run through both ends thereof thoroughly as shown in view **d-d** of the Fig. **9****;**
a strip scraper **500,** which being made of flexible elastic material by unitary-molding into integral body, has a pair of parallel symmetrical elongated groove **501** juxtaposed outwards along both longitudinal lateral sides for being inserted by the pair of said hooked jut strips **302** on the strip scraper receptacle **300** and a pair of parallel symmetrical elongated jut strips **502** juxtaposed above thereof with connection each other on the upper portion as well as an elongated scraper blade **503** in upside down ridge configured at the bottom portion;
two end ferrule caps **600,** which being hollow cuboid in form of front open end **601** and back close end **602,** has the sectional shape of the open end 601 been similar to but with size slightly bigger than that of the sheath cover **400** and a horizontal elastic snap-on nose **603** facing said open end **601** configured inside wall of said close end **602** as shown in view **e-e** of the Fig. **9**; And
a truss saddle **700,** which being used to fix on the end of the wiper arm R via a wiper jointer **800** as shown in Fig. **11****,** has flat bottom to closely affix on the long central attachment 401 of the sheath cover **400** and firmly riveted together with the bow elastic strip **100** by means of two rivets **11** running via the long central attachment 401 and through two rivet bores **101** in the bow elastic strip **100.**

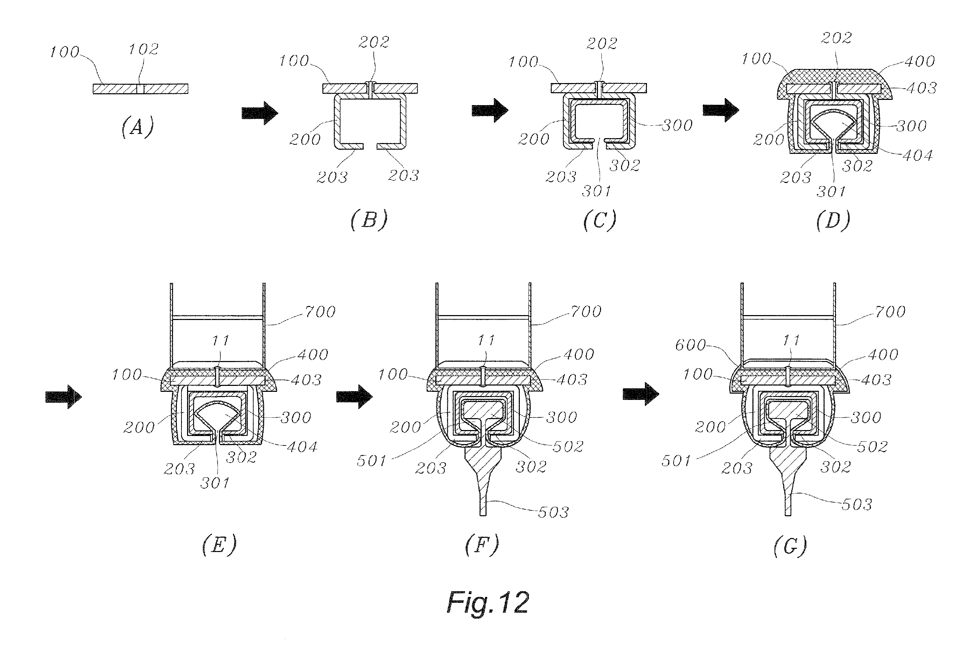

Please further refer to Fig. **9** to Fig. **12**, the assembly steps of the present invention are as below:
(a) insert and pass through the hollow round jut **202** of the clamping devices **200** into the round hole **102** of the bow elastic strip **100** as shown in **view-B** of the Fig. **12****;**
(b) align the strip scraper receptacle **300** with elongated gap 301 facing downwards for directing the clamping angle **203** of the clamping devices **200 ,** then orderly insert into clamping angles **203** up to end as shown in view-***C*** of the Fig. **12****;**
(c) simultaneously align two elongated flutes **403** of the sheath cover **400** with both longitudinal lateral sides of the bow elastic strip **100** and align lower elongated groove **404** with the elongated gap **301** of the strip scraper receptacle **300** respectively, then sleeve the sheath cover **400** forwards to envelope assembly of bow elastic strip **100,** clamping devices **200** and strip scraper receptacle **300** up to the end; At this moment, the elongated groove **404** of the sheath cover **400** is deformed by insetting the strip scraper receptacle **300** so that whose opening downwards is blocked and limited by the elongated gap 301 as shown in **view-D** of the Fig. **12****;**
(d) closely affix the truss saddle **700** on the long central attachment **401** of the sheath cover **400** and firmly rivet together with the bow elastic strip **100** by means of two rivets **11** running via the long central attachment **401** and through two rivet bores **101** in the bow elastic strip **100** as shown in view-***E*** of the Fig. **12**;
(e) simultaneously align two elongated grooves **501** and elongated jut strips **502** with the clamping angle **203** of the clamping devices **200** and deformed elongated groove **404** respectively, then apply force on the strip scraper **500** and pull its leading end lengthwise up to end so that entire elongated jut strips **502** are encompassed in the deformed elongated groove **404** and entire strip scraper **500** is inserted into the strip scraper receptacle **300** as shown in the Fig. **10** and view-***F*** of the Fig. **12** ;
(f) finally, align and cap two open end **601** of the end ferrule cap **600** with each short end attachment **402** of the sheath cover **400** until the snap-on nose **603** in the end ferrule cap **600** firmly snap on the snap-on hole **303** of the strip scraper receptacle **300** and have buckling sound heard to confirm the finish of the assembling process as shown in the Fig. **10** and view-***G*** of the Fig. **12****.**

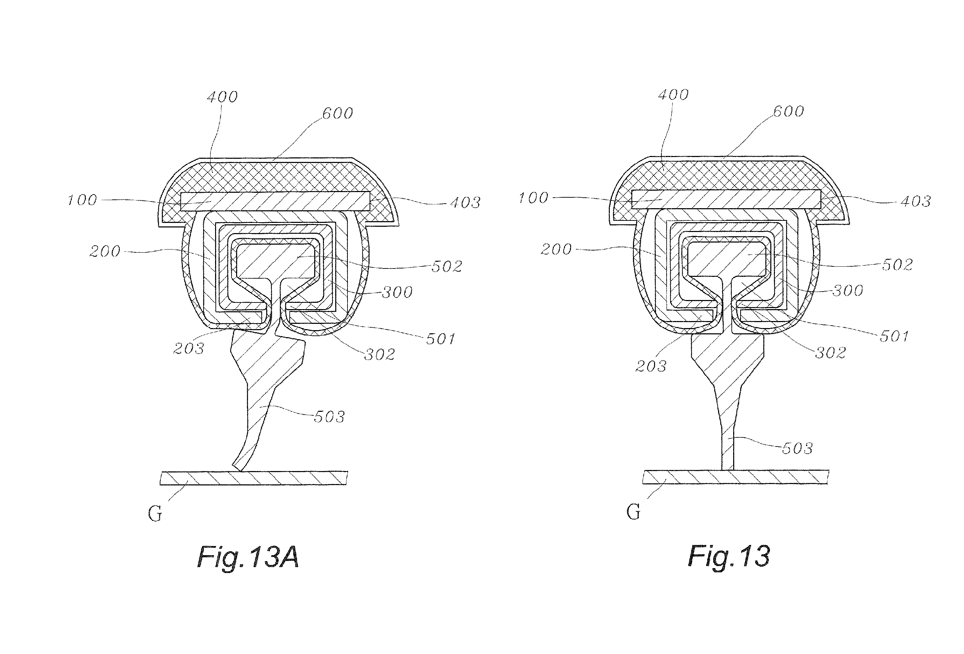

As shown in the Fig. **13** and Fig. **13A****,** besides of the original function in scraping and wiping the rain drops on the windshield G, the present invention also has additional function in blocking and separating the intrusion of the snow and icy particles into any space of the bow elastic strip **100,** clamping devices **200** and strip scraper receptacle **300** by means of the sheath cover **400** and end ferrule caps **600;** thus, the elastic press of the bow elastic strip **100** can be kept well without stiff aging such that maintain the normal function in scraping and wiping the rain drops and snow particles on the windshield G of the vehicle. Moreover, the object model of the present invention has been experimental tested under simulated snow and rain weather by installing it on the real vehicle, the test result shows that it can achieve the expected functional requirement in scraping and wiping the rain drops on the windshield even under harsh circumstance. Therefore, for all vehicle drivers in the snow region, the swapping action between the traditional rain wiper and additional snow wiper can be saved in the future.

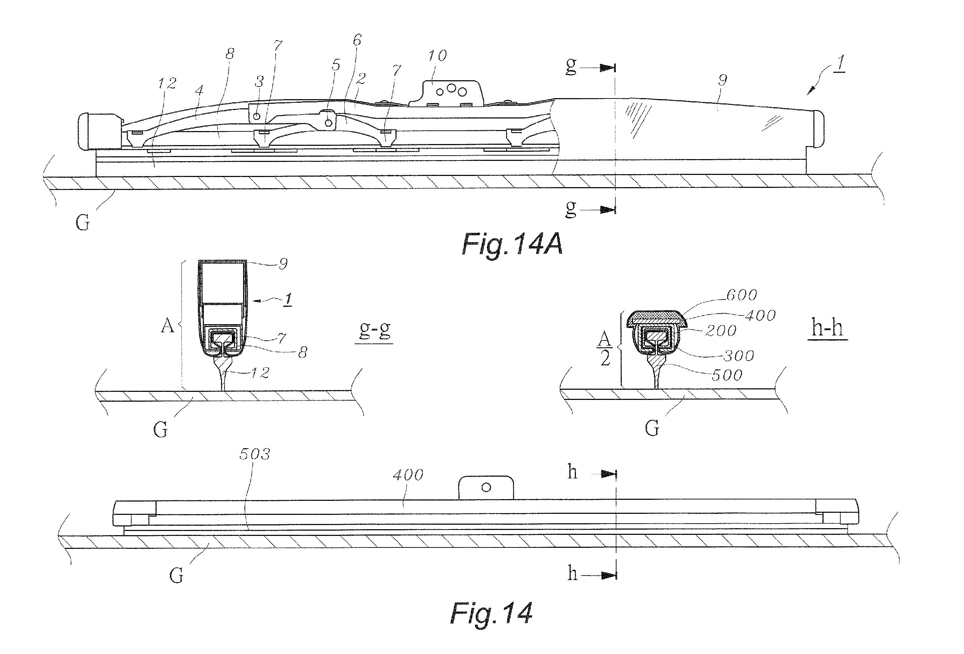

Please further refer to the Fig. **14** and Fig. **14A****,** owing to the bow elastic stripe **100** being the supporting skeleton of the entire wiper for the present invention in contrast with master wiper support **2,** first holding support **4** and second holding support **6** for the conventional arm-supported snow wiper **1,** there is not only significant difference in the total size and weight as described above but also double difference in the bearing area against the wind flow during vehicle movement; Let: the bearing area of the conventional arm-supported snow wiper **1** is "A" (as shown in Fig. **14A**), then, the bearing area of the present invention will be " (1/2)A" (as shown in Fig. **14****).** According to the pressure formula: P = F/A, namely F = P x A; Where, P is the pressure and F is the resultant force suffered from the wind flow in kg unit. The calculating result will be: For conventional arm-supported snow wiper **1, Fg** = P x A kg (as shown in view g-g of the Fig. **14A**); For the present invention, **Fh** = P x 0.5A kg (as shown in view **h-h** of the Fig. **14**); Obviously, **Fg** > **Fh** , namely, the resultant force suffered from the wind flow of the conventional arm-supported snow wiper **1** is greater than that of the present invention. Moreover, the normal swing frequency of the wiper on the windshield is approximate 40~50 times per minute, namely, 2400~3000 times per hour, the product of resultant force **Fg** and **Fh** multiply the 2400~3000 times per hour will reflect the power output required by the motor to drive the corresponding wiper; the longer of the wiper operation, the more difference of the accumulated power consumption between these two different wipers, the more significant in the difference of fuel consumption in the vehicle. Furthermore, inferring the comparative calculation performed above to whole world, the difference of the accumulated power consumption between these two different wipers will become astonishing; Therefore, from the foregoing rough calculation, it is learnt that the contribution of the present invention in economic and environmental protection point is obvious compare to the conventional arm-supported snow wiper **1.**

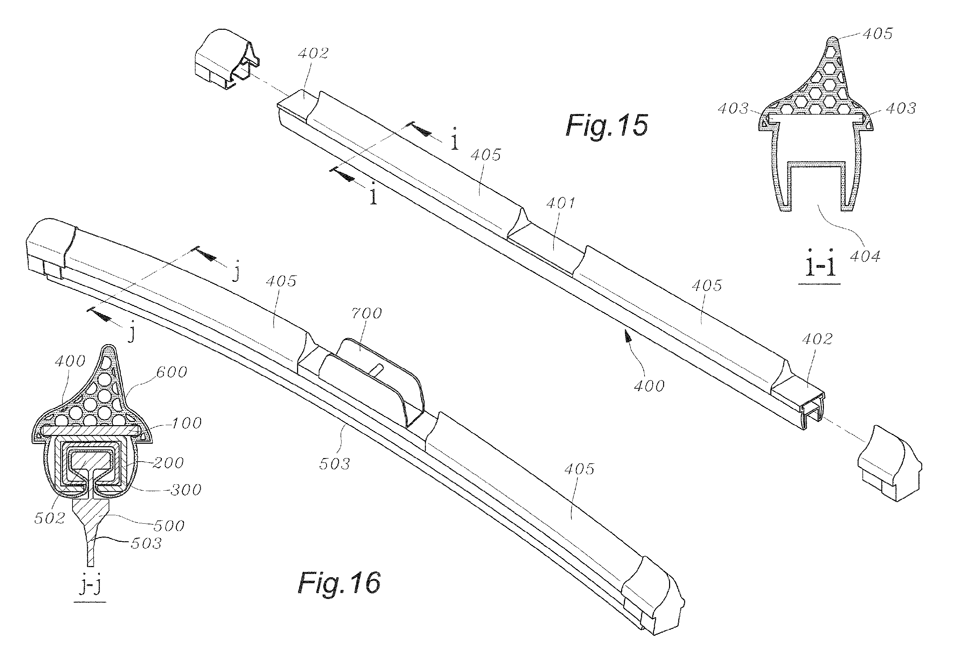

As shown in the Fig. **15** and Fig. **16****,** each outer profile of both side upper portions on the sheath cover 400 beside the long central attachment 401 can be configured into tapered curved ridge **405** respectively for having the effect in guiding air flow.

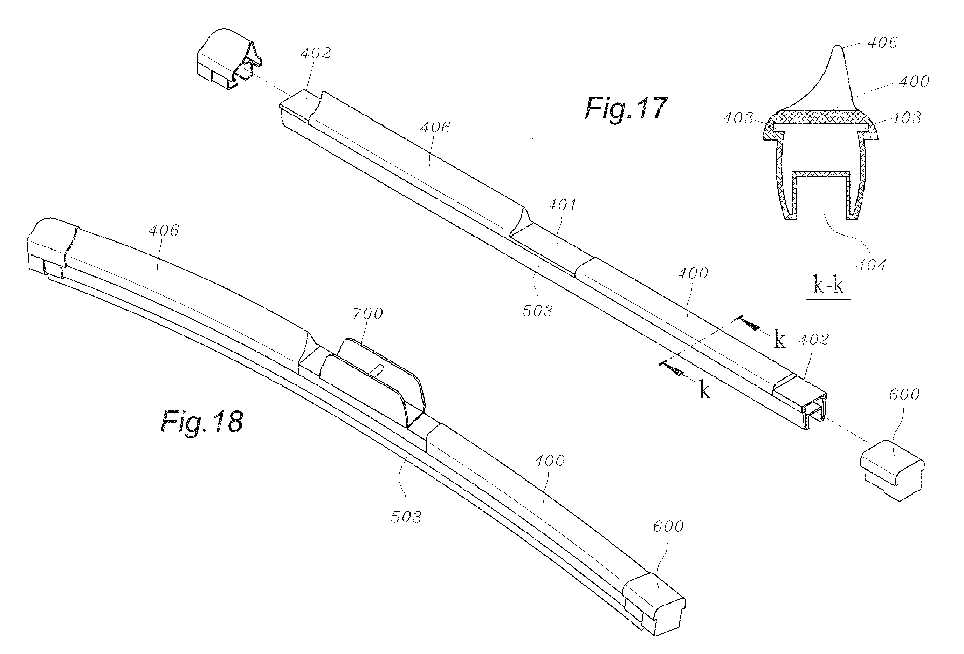

As further shown in the Fig. **17** and Fig. **18**, one outer profile of both side upper portions on the sheath cover 400 beside the long central attachment 401 can be configured into tapered curved ridge **406** for having the effect in guiding air flow too.

In conclusion, basing on **20** years of the design and manufacturing experience in the windshield wiper, the inventor of the present invention realizes that better inventive product will create two-win game for both of the consumers and the manufacturers and the product of simple structure and fair price will appeal and benefit much more consumers. For the present invention, it can totally obsolete the conventional arm-supported snow wiper to avoid the environment pollution from creating mass wasted snow wipers in the future, it let all the vehicle drivers in the snow region save the extra unnecessary expense for buying additional snow wiper, it indirectly decreases the fuel consumption for the vehicle, it prolong the service life span of the wiper-driving motor, most significantly, it can be manufactured by mass production using existing equipment and facility without sacrifice in prerequisite function and quality so that the lowering of the production cost can feedback to the consumers; Hence, it totally conforms to the high criterion of environment protection, economic effect and mass production; Thus, it not only possesses innovative improvement, but also has significant contribution in the industrial application as well as conforms to the essential requirements of the invention patentability.

## Claims

1. A "vehicle windshield wiper for rain and snow dual purpose" comprises:
a bow elastic strip, which being made of elastic metal strip in shape of bow downwards, has a pair of lengthwise symmetrical rivet bores punched in the center thereof and a plurality of round holes punched and distributed in even space manner endwise as well as some oblong hollow pressure adjusting vents perforated thereon;
some detachable clamping devices, which corresponding to said round holes on the bow elastic strip, has a hollow round jut with aperture being slightly smaller than that of the round hole configured in the center of the top side and a pair of parallel symmetrical bent inwards clamping angles juxtaposed downwards at the bottom portion;
a strip scraper receptacle, which being made of flexible plastics by unitary-molding into integral body with shape of flat hollow bar, has a central parallel elongated gap run through both ends thoroughly and a pair of parallel symmetrical bent inwards hooked jut strips juxtaposed along both longitudinal lateral sides of the elongated gap as well as a snap-on hole is respectively punched at each end thereof;
a sheath cover, which being made of flexible elastic material by unitary-molding into integral body with shape of tubular hollow bar, has a flat surface formed on the upper portion with a long central attachment plus two short end attachments and a pair of parallel symmetrical elongated flutes juxtaposed insides of both internal longitudinal lateral sides for being inserted by the bow elastic strip as well as an elongated groove run through both ends thereof thoroughly;
a strip scraper, which being made of flexible elastic material by unitary-molding into integral body, has a pair of parallel symmetrical elongated groove juxtaposed outwards along both longitudinal lateral sides for being inserted by the pair of said hooked jut strips on the strip scraper receptacle and a pair of parallel symmetrical elongated jut strips juxtaposed above thereof with connection each other on the upper portion as well as an elongated scraper blade in upside down ridge configured at the bottom portion;
two end ferrule caps, which being hollow cuboid in form of front open end and back close end, has the sectional shape of the open end been similar to but with size slightly bigger than that of the sheath cover and a horizontal elastic snap-on nose facing said open end configured inside wall of said close end; And
a truss saddle, which being used to fix on the end of the wiper arm via a wiper jointer, has flat bottom to closely affix on the long central attachment of the sheath cover and firmly riveted together with the bow elastic strip by means of two rivets.

2. The "vehicle windshield wiper for rain and snow dual purpose" as recited in the claim 1, wherein, each outer profile of both side upper portions on the sheath cover beside the long central attachment is configured into tapered curved ridge respectively.

3. The "vehicle windshield wiper for rain and snow dual purpose" as recited in the claim 1, wherein, one outer profile of both side upper portions on the sheath cover beside the long central attachment is configured into tapered curved ridge.
